# EUROPEAN PATENT APPLICATION

(11) **EP 1 927 409 A1**
(43) Date of publication of application: **04.06.2008**
(21) Application number: 06125163.3
(22) Date of filing: 30.11.2006
(51) Int. Cl.: B08B 5/02, B29D 11/00

(54) **Method for handling contact lens**

(71) Applicant: BAUSCH & LOMB INCORPORATED, Rochester, New York 14604-2701 (US)
(72) Inventor: Sullivan, Jerry E., County Waterford (IE); O'Mahony, John Martin, Mullinavat County Kilkenny (IE); Kelly, Alan D., Piltown County Kilkenny (IE); Laffan, John J., Kilmacow County Kilkenny (IE)
(74) Representative: McKeown, Yvonne Mary

(57) **Abstract**

A method that involves removing debris from the peripheral portion of a contact lens, immediately prior to inspection of the peripheral portion. The method includes: holding a contact lens (10) with a picker (1); subjecting a peripheral portion (14) of the contact lens not in contact with the picker to compressed gas to remove debris from said peripheral portion; and inspecting said peripheral portion.

## Description

### Background

In the manufacture of contact lenses, it may be desirable to inspect portions of the contact lenses. As an example, U.S. Patent No. 6,079,826 discloses a method where markings placed on the periphery of a contact lens are used to identify characteristics, such as optical correction, of the contact lens. As another example, U.S. Patent No. 6,491,393 discloses a method where markings placed on the periphery of a contact lens are used to confirm characteristics of the lens, for example, the rotational offset between the ballast and the toric optical correction of a toric contact lens. As a further example, it may be desired to inspect the contact lens periphery to determine whether there are defects in the lens edge. In such methods, debris on the contact lens may compromise the inspection process. For example, markings on the lens may not be detected properly, or removable debris on the lens may result in rejection of an otherwise acceptable contact lens.

### Summary of the Invention

This invention provides a method for removing debris from the peripheral portion of a contact lens to improve subsequent inspection of the contact lens, resulting in improved yields and a more efficient manufacturing process.

The method comprises: holding a contact lens with a picker; subjecting a peripheral portion of the contact lens not in contact with the picker to compressed gas to remove debris from said peripheral portion; and inspecting said peripheral portion.

According to preferred embodiments, the contact lens is removed from a lens carrier with the picker and held by the picker. The lens carrier may have the form of a contact lens mold portion, especially an anterior mold portion. Alternately, the lens carrier may have the form of a tray or a contact lens blister package.

The contact lens may be held by the picker by applying a vacuum.

Inspection may involve detection and confirmation of markings or symbols on the contact lens peripheral portion and/or detecting defects in the contact lens edge.

According to preferred embodiments, the contact lens is unhydrated when subjected to the compressed gas and inspected, and the concave surface of the contact lens is contacted with the picker and subjected to the stream of compressed gas.

### Brief Description of the Drawing Figures

Figure 1 is a perspective view of a picker according to various preferred embodiments.
Figure 2 is a front view of the picker of Figure 1 while retaining a contact lens and in alignment with an inspection unit.
Figure 3 is a cross-sectional view of a contact lens on an anterior mold half.
Figure 4 is a cross-sectional view of the lower end of the hollow body.

### Detailed Description of Various Preferred Embodiments

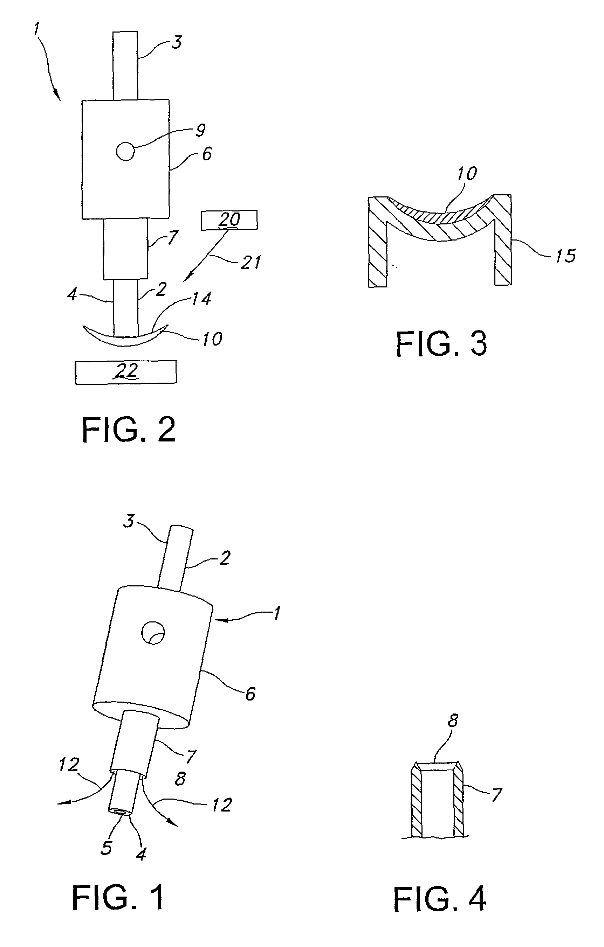

As seen in Figures 1 and 2, lens picker 1 includes an inner tube 2. The upper end 3 of inner tube 2 is connected to a vacuum source (not shown) so that suction is provided at opening 5 in lower end 4 of inner tube 2. When the vacuum source is turned on, a contact lens 10 may be picked up and retained by picker 1, as shown in Figure 2.

Picker 1 includes hollow body 6. The lower end 7 of hollow body 6 includes an opening 8 which is larger in diameter than the outer diameter of lower end 4 of inner tube 2. Hollow body 6 includes opening 9 for connection to a source of compressed gas (not shown). Accordingly, compressed gas is forced through opening 8, as schematically shown by arrows 12, and directed on to the peripheral portion 14 of contact lens 10 while the lens is retained as in Figure 2.

Figure 3 illustrates a contact lens 10 on a contact lens carrier 15, prior to being picked up by picker 1. In the illustrated embodiment, contact lens carrier 15 has the form of an anterior contact lens mold portion, i.e., the anterior mold half in which the contact lens was cast. Other configurations of carrier 15 are possible, depending on the desired stage in the manufacturing process in which inspections are carried out. For example, carrier 15 may have the form of a contact lens blister package or the well of a tray.

As seen in Figure 4, the lower end 7 of hollow body 6 is preferably chamfered at opening 8, for example, with an internal and an external chamfer of 45° x 0.25mm. Hollow body 6 is preferably made of a light-absorbent material, such as an acetal AH polymer, with a high quality surface finish. Such a design helps to ensure that the blow-off is not detected by detector 22 when light is directed through the peripheral portion 14 of the lens, as described in operation below.

Picker 1 may be mounted on an articulating arm so that it is movable with respect to a stationary contact lens. Alternately, picker 1 may be stationary such that contact lens 10 and its carrier 15 are moved into position below picker 1.

As an example, an illustrative operation of the present invention follows. Following casting of a contact lens in a two-part mold assembly composed of anterior and posterior halves, the posterior mold half is removed, with the contact lens retained with the anterior mold half. The contact lens is then released from the anterior mold half so that it does not adhere to this mold half, and the anterior mold half and the contact lens are positioned in alignment with picker 1. Picker 1 is moved downward so that lower end 4 contacts the concave, posterior surface of contact lens 10, and with the vacuum source turned on, picker 1 is moved upward with contact lens retained on lower end 4, as seen in Figure 1. Compressed gas is forced through opening 8 to remove any debris on the peripheral portion 14 of the lens concave surface. The picker 1 is aligned with inspection unit 20, shown schematically in Figure 2, which directs light 21 through the peripheral portion 14 to detector 22. Following this inspection stage, the contact lens may be further processed, for example, hydrated, packaged, and sterilized.

In this illustrated embodiment, the contact lens has been removed from the anterior mold half, so no debris should be present on the convex, anterior surface of the lens. If the method of this invention is employed in a different stage of manufacturing or with a different carrier, it may be desired to also direct a stream of compressed gas on the convex surface of the lens. In such a case, a separate nozzle for the compressed gas could be positioned below the lens retained on the picker.

## Claims

1. A method comprising:
holding a contact lens (10) with a picker (1);
subjecting a peripheral portion (14) of the contact lens not in contact with the picker to compressed gas to remove debris from said peripheral portion; and
inspecting said peripheral portion.

2. The method according to claim 1, wherein the contact lens is removed from a lens carrier (15) with the picker and held by the picker.

3. The method according to claim 2, wherein the lens carrier is a contact lens mold portion.

4. The method according to claim 3, wherein the mold portion is an anterior mold portion.

5. The method according to claim 2, wherein the lens carrier is a tray.

6. The method according to claim 2, wherein the lens carrier is a contact lens blister package.

7. The method according to claim 2, wherein the contact lens is held by the picker by applying a vacuum.

8. The method according to claim 1, wherein inspecting includes detecting markings or symbols on said peripheral portion.

9. The method according to claim 1, wherein inspecting includes detecting defects in the contact lens edge.

10. The method according to claim 1, wherein the contact lens is unhydrated when subjected to the compressed gas and inspected.

11. The method according to claim 1, wherein a concave surface of the contact lens is contacted with the picker, and the compressed gas is directed to the concave surface of the contact lens.
subjecting a peripheral portion of the contact lens not in contact with the picker to compressed gas to remove debris from said peripheral portion.
